(19) Europäisches Patentamt
European Patent Office
Office européen des brevets

(11) **EP 2 541 229 A2**

(12) **EUROPEAN PATENT APPLICATION**

(43) Date of publication:
**02.01.2013 Bulletin 2013/01**

(51) Int Cl.:
***G01N 15/06*** (2006.01)  ***F02D 41/14*** (2006.01)

(21) Application number: **12173092.3**

(22) Date of filing: **22.06.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **30.06.2011 US 201113172949**

(71) Applicant: **Delphi Technologies, Inc.
Troy, MI 48007 (US)**

(72) Inventors:
• **Hocken, Larry Robert
  Davison, MI 48423 (US)**
• **Nelson, Charles Scott
  Fenton, MI 48430 (US)**

(74) Representative: **Denton, Michael John et al
Delphi France SAS
Bât. le Raspail - ZAC Paris Nord 2
22, avenue des Nations
CS 65059 Villepinte
95972 Roissy CDG Cedex (FR)**

(54) **Method and system for contamination removal from a particulate matter sensor**

(57) A method and system is described for removing contamination from a conductive particulate matter sensor. The sensor has a substrate with two electrodes on the substrate configured to collect particulate matter between the electrodes, thereby establishing an electrically conductive path through collected particulate matter between the electrodes that can be detected by measuring electrical resistance between the electrodes. The method includes heating the sensor to a first temperature for a first duration of time, wherein the first temperature and first time are sufficient to remove collected particulate matter from the sensor. The method further includes heating the sensor to a second temperature for a second duration of time, wherein the second temperature is higher than the first temperature, to remove contaminants that cannot be removed by heating to the first temperature for the first duration of time.

FIG. 1

**Description**

BACKGROUND OF THE INVENTION

This invention relates generally to sensors for detecting electrically conductive particulate matter, such as soot, and more particularly to a method and system for removing contamination from such sensors.

Incomplete combustion of certain heavy hydrocarbon compounds, such as heavy oils, diesel fuel, and the like may lead to particulate formation (e.g., soot). In the operation of internal combustion engines, excessive particulate formation can lead to "smoking" of the engine, which causes air pollution even though the carbon monoxide, hydrocarbons, and other pollutant components of the gaseous state exhaust emissions may be relatively low. Emission regulations require many engines to limit the levels of particulate emissions, and various control technologies such as diesel particulate filters (DPF) have been employed for this purpose.

In order to monitor the emission of particulate matter in the exhaust streams of certain types of internal combustion engines, e.g., to assess the effectiveness of DPF's, it is known to provide a particulate sensor system for detecting the level of particulate concentration emitted from an exhaust gas. Various particulate sensors have been proposed, including those shown in U.S. Pat. No. 4,656,832 issued to Yukihisa et al., U.S. Pat. No. 6,634,210 issued to Bosch et al., U.S. Pat. Publ. No. 2008/0283398 A1, U.S. Pat. Publ. No. 2008/0282769 A1, and U.S. Pat. Publ. No. 2009/0139081 A1, the disclosures of each of which are hereby incorporated by reference in their entirety.

Particulate sensors such as those described above generally have a pair of spaced apart sensing electrodes disposed on a substrate. The sensing electrodes are coupled to a measurement circuit by way of electrically conductive leads. The operating principle of the particulate sensor is based on the conductivity of the particulates (e.g., soot) deposited on (or over) the sensing electrodes. The electrical resistance between the sensing electrodes is relatively high when the sensor is clean but such resistance decreases as soot particulates accumulate. These sensors also have a heater that can be selectively activated to regenerate the sensor, that is, to burn off the soot particulates to "reset" the sensor to a known, base "clean" state.

However, a sensor may become "poisoned" by deposition of contamination on the sensor. As used herein, the terms "contamination" and "contaminant" refer to materials that, when deposited on the sensor, interfere with the ability of the sensor to detect soot deposited on the sensor. Examples of contaminant materials include iron oxide and calcium oxide. These materials may be introduced, for example, by thermal or chemical decomposition of additives in fuel or motor oil. These contaminant materials may have an electrical resistance that is relatively high at lower temperatures, with the resistance decreasing at increasing temperatures. Deposition of a relative high resistance contaminant layer on the sensor may act to insulate the sensing electrodes from the soot particulates, reducing the sensitivity of the sensor for its intended purpose of sensing particulate matter. The contaminant material may be thermally stable at the temperature used to regenerate the sensor, resulting in the contaminant persisting on the surface of the sensor throughout the normal operating conditions of the sensor.

Accordingly, there is a need for a system and method for removing contaminants from the surface of a particulate sensor.

SUMMARY OF THE INVENTION

The present invention relates to a method of removing contamination from a particulate matter sensor. The method according to the invention comprises the steps of:

(a) heating the sensor to a first temperature for a first duration of time, said first temperature and first duration of time sufficient to effect removal of soot from the surface of the particulate matter sensor; and
(b) heating the sensor to a second temperature for a second duration of time, said second temperature being higher than said first temperature, said second temperature and second duration of time being sufficient to effect removal of contamination from the surface of the particulate matter sensor.

Exemplary embodiments of the invention also relate to a storage medium encoded with machine readable computer program code for removing contamination from an electrically conductive particulate matter sensor as described above where the storage medium includes instructions for causing a computer to implement the above-described method.

Another exemplary embodiment of the invention relates to a contamination removal system for an electrically conductive particulate matter sensor as described above, the system comprising a microprocessor in communication with the sensor and a storage medium including instructions for causing the microprocessor to implement the above-described method.

These and other advantages and features will become more apparent from the following description taken in conjunction with the drawings.

BRIEF DESCRIPTION OF THE DRAWINGS

The subject matter which is regarded as the invention is particularly pointed out and distinctly claimed in the claims at the conclusion of the specification. The foregoing and other features, and advantages of the invention are apparent from the following detailed description taken in conjunction with the accompanying drawings in which:

FIG. 1 is an electrical schematic of a particulate matter sensing system for which the sensor contamination removal of the invention may be practiced.

FIG. 2 is an electrical schematic of an alternative particulate matter sensing system incorporating a bias resistor for which the sensor contamination removal of the invention may be practiced.

FIG. 3 is an exploded perspective view of a sensing element as found in the particulate matter sensing system of Fig. 2.

FIG. 4 is a plan view of a sensing element as found in the particulate matter sensing system of Fig. 2.

FIG. 5 is an electrical schematic that includes aspects of the present invention.

FIG. 6 is a schematic illustration of an engine control module and a particulate matter sensor.

DESCRIPTION OF THE PREFERRED EMBODIMENT

Referring now to the Figures, the invention will be described with reference to specific embodiments, without limiting same.

In describing and claiming algorithms according to the invention, letters and naming conventions are arbitrarily employed to represent numerical values (e.g., $R_{OBD\_hot}$, $K_{R\_OBD\_cont\_pct}$). These naming conventions are used solely to enhance the readability of the description of the invention, and are not intended to have any functional significance whatsoever. The representation of these numerical values is intended to be precisely the same as if, for example completely arbitrary descriptions (e.g., $R_1$, $R_2$, $K_1$, $K_2$) had been used. Additionally, it should be noted that in the practice of the invention, measurements of resistance between the electrodes may be made by applying a known current across the electrodes, measuring the voltage differential between the electrodes and calculating the resistance using Ohm's law, as is well-known in the art. It would of course be possible to simply use the voltage values in place of resistance values in the algorithm of the invention by converting the various resistance constants and equations to voltage, and such alternative embodiments are considered to be within the scope of the invention.

In general, an exemplary particulate matter sensor that can be used in the practice of the present invention comprises a sensing element and a heating element, wherein the sensing element may comprise, but is not limited to, at least two sensing electrodes in proximity to each other on a substrate and configured so as to accumulate particulate matter therebetween, and wherein the heating element may comprise, but is not limited to, a temperature sensor, and a heater. The sensor may include a multi-layered structure comprising the sensing element, the temperature sensor, the heater, and a combination comprising at least one of the foregoing, contained in a single structure formed, e.g., by multi-layer technology.

The sensing electrodes can include metals, such as, gold, platinum, osmium, rhodium, iridium, ruthenium, aluminum, titanium, zirconium, and the like, as well as, oxides, cermets, alloys, and combinations comprising at least one of the foregoing metals. In an exemplary embodiment, the sensing electrode can comprise a platinum/alumina cermet wherein the platinum is about 90 wt % (weight percent) to about 98 wt % of the sensing electrode. In another exemplary embodiment, the sensing electrode comprises about 93 wt % to about 95 wt % platinum, where weight percent is based on the total dry weight of the cermet. Each sensing electrode may be composed of the same or different material as the other sensing electrode(s).

The sensing electrodes can be formulated in any fashion. In one exemplary embodiment, however, the sensing electrodes are formed by first preparing an ink paste by mixing an electrode forming-metal powder (e.g., platinum, gold, osmium, rhodium, iridium, ruthenium, aluminum, titanium, zirconium, and the like, or combinations of at least one of the foregoing) with oxides in a sufficient amount of solvent to attain a viscosity suitable for printing. The oxides used to form the sensing electrodes may include those oxides that do not promote the oxidation of particulates and that do not lower the burn-off temperature of the particulates. Non-suitable oxides are, e.g., copper oxide, cerium oxide, and iron oxide. The ink paste forming the sensing electrode can then be applied to an electrode substrate via sputtering, chemical vapor deposition, screen printing, flame spraying, lamination, stenciling, or the like.

The sensing electrodes may be disposed onto the electrode substrate such that a constant distance of separation between each sensing electrode is created. Alternatively, a contiguous conductor area may be disposed on the substrate, and conductor material may subsequently be removed along a path by an ablative means, thereby defining a separation between electrode regions. The width of the distance separating the sensing electrodes can vary widely, depending upon desired design parameters. In one exemplary embodiment, this distance comprises a width of separation of about 0.01 to about 0.12 millimeter (mm).

Both the heater and the temperature sensor, forming in whole or in part, the heating element, can comprise various materials. Possible materials include platinum, gold, palladium, and the like; and alloys, oxides, and combinations comprising at least one of the foregoing materials, with platinum/alumina, platinum/palladium, platinum, and palladium. The heater and temperature sensor can be applied to the sensor in any fashion, such as by sputtering, chemical vapor deposition, screen printing, flame spraying, lamination, and stenciling among others. In one embodiment, the heater can comprise a thickness of about 3 to about 50 micrometers. In another embodiment the heater thickness is about 5 to about 30 micrometers. In yet another embodiment, the heater thickness is about 10 to about 20 micrometers.

The sensor may further comprise various substrates useful in electrically isolating and protecting the sensing element and the heating element from the temperature surrounding the sensor and/or from the thermal reduction of the condensed particulates during the self-regeneration cycles. The substrates include, but are not limited to, an electrode protective layer, an electrode substrate, an isolation layer, an insulating temperature substrate, a heater substrate, insulating substrates, wherein the number of insulating substrates is sufficient to prevent disruptive ionic or electrical communication between the heating element and the sensing electrode (e.g., about 2 to about 3 insulating substrates), and combinations comprising at least one of the foregoing.

The substrates can comprise non-ionically conducting, electrically insulating materials. Possible electrically insulating materials include oxides, such as alumina, zirconia, yttria, lanthanum oxide, silica, and combinations comprising at least one of the foregoing, or any like material capable of inhibiting electrical communication and providing physical protection. In order to hinder electrical communication between the components of the sensor, the substrates may be composed of a high purity oxide; e.g., less than about 10.0 wt % impurities. In another embodiment, the substrates comprise less than about 8.0 wt % impurities. In yet another embodiment, the substrates comprise less than about 5.0 wt impurities, wherein the weight percent of the impurities is based on the total weight of the substrate. Although the composition of the individual substrates can vary, in certain embodiments they comprise a material having substantially similar coefficients of thermal expansion, shrinkage characteristics, and chemical compatibility in order to minimize, if not eliminate, delamination and other processing problems. Alkaline (e.g., sodium, potassium, lithium, and the like) oxides should be avoided as they can be easily reduced to form impurities in the heater, temperature sensor, and the sensing electrodes.

In general, each of the substrates can be of sufficient size to support the entire length of the sensing electrodes, the temperature sensor, and/or the heater. The thickness of each substrate can be determined based on the desired thermal response time of the self-regeneration cycle, where shorter thermal response times require a smaller thickness. The thickness of each substrate can be up to about 200 micrometers thick. In an exemplary embodiment, the substrate thickness is about 50 to about 180 micrometers. In another exemplary embodiment, the substrate thickness is about 140 to about 160 micrometers. The substrates can be formed using ceramic tape casting methods, and the like.

The sensor may further comprise various leads responsible for electrically communicating the sensor with the sensor circuit. One end of each sensing electrode, one end of the temperature sensor, and one end of the heater may have a connecting point to which one end of at least one lead may be attached. Each sensing electrode may be electrically connected with at least one lead extending from one end of each sensing electrode; and the heater is electrically connected with at least one lead extending from one end of the heater.

After acquiring the components of the sensor, the sensor may be constructed according to thick film multilayer technology such that the thickness of the sensor allows for good thermal response time toward the thermal cycle of sensor regeneration. In an exemplary embodiment, the sensor element thickness is about 0.1 to about 3.0 millimeter (mm).

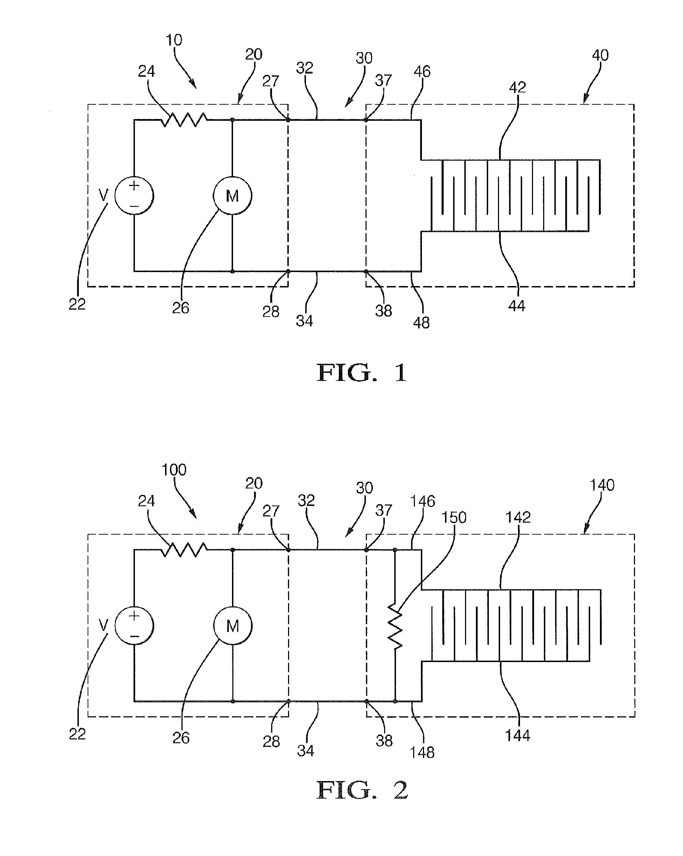

Fig. 1 is an electrical schematic of a particulate matter sensing system 10. The system may be generally considered as partitioned as indicated into a controller portion 20, a wiring harness portion 30, and a sensing element portion 40. The controller portion 20 comprises a means for measuring the impedance of a circuit connected thereto. In the exemplary controller portion 20 in Fig. 1, the impedance measurement means includes a voltage source 22 that provides a voltage value $V_{supply}$, a pull-up resistor 24 having a resistance value $R_{pullup}$, and a voltage measurement means 26. While voltage source 22 is depicted in Fig. 1 as a DC source with a given polarity, it will be appreciated that voltage source 22 can alternatively be an AC source, a DC source having opposite polarity from what is depicted, or a source providing both an AC and a DC voltage component, without departing from the inventive concept described herein. The controller portion 20 electrically interfaces to the wiring harness portion 30 by connection means 27 and 28. The wiring harness portion 30 includes conductors 32 and 34. The wiring harness portion 30 electrically interfaces to the sensing element portion 40 by connection means 37 and 38. The sensing element portion 40 includes a first electrode 42 electrically connected by conductor 46 to connection means 37, and a second electrode 44 electrically connected by conductor 48 to connection means 38.

As formed on the sensing element, the first electrode 42 is electrically isolated from the second electrode 44, so that a sensing element 40 in the absence of particulate matter appears electrically as an open circuit when measured between connection means 37 and connection means 38. In the absence of particulate matter, the voltage measured by measurement means 26 will be essentially equal to $V_{supply}$, the voltage provided by voltage source 22.

The first electrode 42 and second electrode 44 are preferably shaped in the form of interdigitized fingers with a small gap therebetween. In operation, particulate matter that is deposited on the sensing element so as to bridge the gap between the electrodes 42, 44 can be detected because the particulate matter forms a resistive path bridging the normally open circuit between the electrodes 42, 44. If the resistance of the particulate matter bridging the electrodes is assigned the value $R_{particulate}$, the voltage measured by measurement means 26 will be:

$$V_{measured} = V_{supply} \frac{R_{particulate}}{R_{pullup} + R_{particulate}}$$

As particulate matter accumulates between first electrode 42 and second electrode 44, the resistance $R_{particuiate}$ will decrease, and the voltage $V_{measured}$ at measurement means 26 will decrease from the maximum value of $V_{supply}$. The controller portion can thereby determine the impedance connected across connection means 27 and 28 as a function of the voltage measured between points 27 and 28.

Fig. 2 is an electrical schematic of an alternative particulate matter sensing system 100 incorporating a bias resistor, as disclosed in U.S. Patent Application Serial Number 12/947,867 filed November 17, 2010 titled "SELF DIAGNOSTICS OF A PARTICULATE MATTER SENSOR", the contents of which are incorporated by reference in their entirety. Controller portion 20 and wiring harness portion 30 are essentially the same as in the system 10 in Fig. 1. The sensing element portion 140 includes a first electrode 142 electrically connected by conductor 146 to connection means 37, and a second electrode 144 electrically connected by conductor 148 to connection means 38. The sensing element portion 140 in Fig. 2 contains an additional bias resistor 150 having a resistance value of $R_{bias}$ electrically connected between conductors 146 and 148. The resistance of the sensing element $R_{sensor}$ as measured between connection means 37 and connection means 38 is the parallel combination of $R_{bias}$ and the resistance resulting from particulate matter bridging the gap between the first electrode 142 and the second electrode 144. $R_{sensor}$ can be represented mathematically as:

$$R_{sensor} = \frac{R_{bias} \times R_{particulate}}{R_{bias} + R_{particulate}}$$

In the absence of particulate matter on sensing element 140, the term $R_{particulate}$ is very large compared to $R_{bias}$, and the effective sensor resistance $R_{sensor}$ is essentially equal to $R_{bias}$. This condition provides the maximum resistance value of $R_{sensor}$. As particulate matter accumulates so as to bridge the gap between the first electrode 142 and the second electrode 144, the effective sensor resistance $R_{sensor}$ will decrease from its maximum value of $R_{bias}$.

For the particulate matter sensing system 100 depicted in Fig. 2, the voltage measured by measurement means 26 will be:

$$V_{measured} = V_{supply} \frac{R_{sensor}}{R_{pullup} + R_{sensor}}$$

In the absence of particulate matter, the value of $R_{sensor}$ will be at its maximum and will essentially equal $R_{bias}$. Under this condition, the voltage measured by measurement means 26 will be:

$$V_{measured} = V_{supply} \frac{R_{bias}}{R_{pullup} + R_{bias}}$$

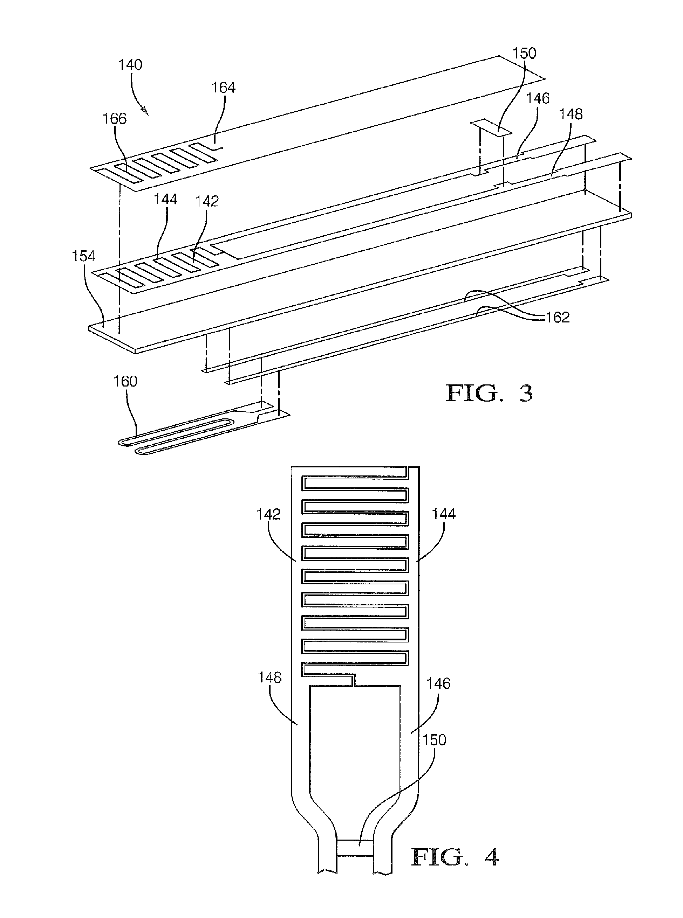

Fig. 3 is an exploded perspective view of the sensing element 140 of Fig. 2. The sensing element 140 includes an electrically insulating substrate 154. While shown as a single layer, it will be appreciated that substrate 154 may be formed by laminating together a plurality of layers. Conductive material disposed on one surface of substrate 154 is patterned to form conductors 146 and 148 and electrodes 142 and 144. Resistor material to form bias resistor 150 is deposited so as to form a resistive path between conductors 146 and 148. A protective layer 164 may also be included to protect the conductive material that forms electrodes 142 and 144, as well as portions of the conductors 146, 148 that may be exposed to abrasive particles in the gas stream being measured. The protective layer 164 includes an open area 166 exposing the gap between the electrodes 142 and 144 to allow particulate matter to bridge the electrodes 142 and 144. The protective layer 164 may also extend to cover bias resistor 150.

A particulate matter sensor may also include a heating means that is controllable to raise the temperature in the vicinity of the electrodes 142, 144 on the sensing element. Raising the temperature sufficiently for a sufficient duration of time will result in particulate matter being removed from the surface of the sensing element, thereby restoring the resistance of the area between the sensing electrodes 142, 144 to a high resistance or essentially open circuit condition. This open circuit condition appears electrically in parallel with the bias resistor 150, so that the total resistance measured between connection means 37 and connection means 38 is restored to $R_{bias}$. The sensing element 140 depicted in Fig. 4 includes a heater 160 and heater leads 162, on the opposite surface of the substrate from the electrodes 142, 144. The heater 160 is positioned to allow the heater 160 to clean the particulate matter from the vicinity of the electrodes 142, 144 when the heater 160 is electrically powered by supplying current through heater leads 162.

Fig. 4 is a plan view of the conductor and resistor pattern of a sensing element 140 as depicted in Figs. 2 and 3. Bias resistor 150 is located remote from the first electrode 142 and the second electrode 144 to minimize heating of the bias resistor 150 when the heater (not shown) is activated to clean the particulate matter from the vicinity of the electrodes 142, 144.

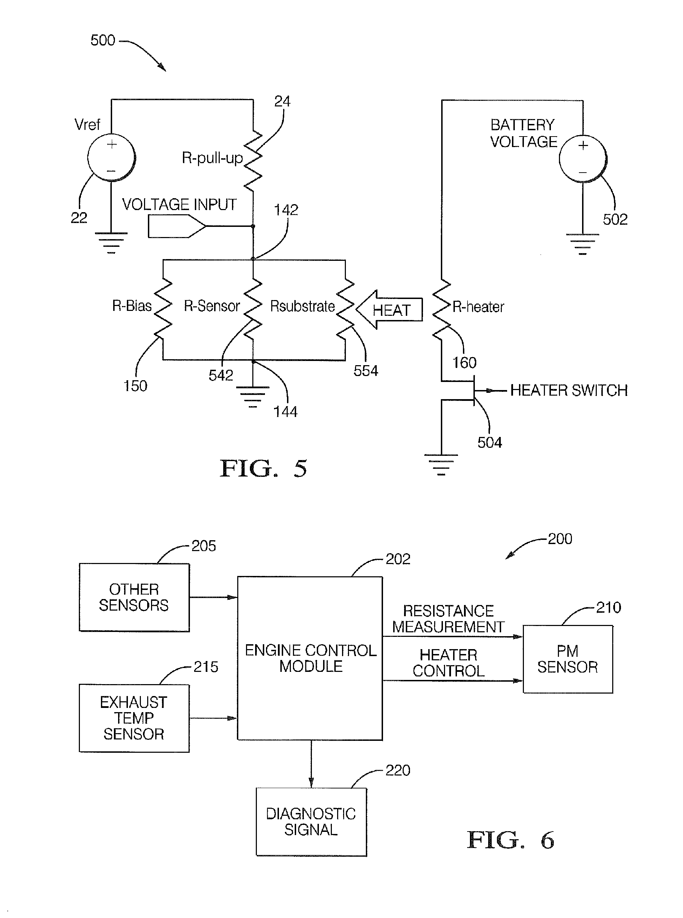

Referring now to Fig. 5, a non-limiting example of a particulate sensor system 500 is illustrated. The system includes a reference voltage source 22, a pull-up resistor 24, a bias resistor 150, and an arrangement for measuring the voltage across electrodes 142, 144. As shown in Fig. 5, voltage across the electrodes 142, 144 is dependent on the resistance between these electrodes. This resistance can be viewed as the parallel combination of three resistances, identified in Fig. 5 as 150, 542, and 554. Resistance 150 is the bias resistor, resistance 542 represents the resistance of material deposited between the sensing electrodes 142 and 144, and resistance 554 represents the resistance contribution of the material that comprises substrate 154 in Fig. 3. The substrate typically has a high resistivity such that resistance 554 can for most purposes be ignored, that is, treated as an open circuit. However, information regarding the resistivity 554 and the temperature coefficient of resistance of the substrate material 154 may be used advantageously in diagnostic methods related to the particulate matter sensor, as disclosed in U.S. Patent Application Serial No. 12/614,654 and U.S. Patent Application Serial No. 13/171,540, the contents of both of which are hereby incorporated by reference in their entirety. Fig. 5 also includes a voltage source 502 configured to deliver energy to heater 160 when heater switch 504 is turned on.

The material deposited between the sensing electrodes 142 and 144 that forms resistance 542 is preferably the particulate matter (soot) that the sensor is intended to detect. It has been found that other contaminant materials may be present in the gas stream to which the sensor is exposed, and these contaminant materials may be deposited on the surface of the sensor. Further, the presence of a contaminant material between the electrodes 142, 144 may interfere with the ability of the sensor to detect the presence of soot. It is therefore desirable to be able to remove contaminants from the sensor in order to restore operability of the sensor to detect soot.

Some contaminants may be able to be thermally removed from the surface of the sensor by subjecting the sensor to a high enough temperature for a sufficient period of time to effect removal of the contaminant, similar to the way that soot may be removed from the surface of the sensor by thermal regeneration. It has been found that some materials that may form contaminants may not be removed by the same regeneration profile (time and temperature) that is sufficient to remove soot from the sensor, but the contaminants may be able to be removed by supplying more thermal energy than the amount required to remove soot. However, it is not desirable to merely increase the amount of thermal energy used for all sensor regenerations so as to remove contaminants as well as soot during a regeneration. One reason this would be undesirable is that higher than regeneration temperatures would expose the sensor to unnecessary thermal stress, which may introduce durability concerns. Additionally, higher regeneration temperatures may require additional heater current, necessitating heater drive components and wiring capable of supplying the higher current. Further, higher heater currents represent additional electrical load to the system, resulting in unnecessary energy drain which may impact fuel efficiency in a vehicle.

According to aspects of the present invention, the heater 160 is selectively controlled to at least two different operating states. In the first operating state, the heater 160 is energized so as to heat the sensor 140 to a first temperature and maintain the sensor at or above the first temperature for a first period of time, wherein the heating of the sensor to the first temperature for the first time duration is sufficient to remove soot from the surface of the sensor. This operating state represents a "normal" regeneration process, which is intended to remove particulate matter from the surface of the sensor and return the sensor to a clean, high resistance state. For a normal regeneration, the target temperature for the sensor may be approximately 750°C. The time required to achieve removal of soot may be predetermined, or alternatively the resistance between the electrodes 142, 144 may be monitored during regeneration to recognize when soot removal has been achieved.

According to a further aspect of the invention, a second operating state for the heater comprises energizing the heater 160 so as to heat the sensor 140 to a second temperature higher than the previously described first temperature, and maintained at or above the second temperature for a duration of time sufficient to remove a contaminant from the sensor. For example, it has been determined that a calcium based contaminant may be removed from the sensor by heating the sensor to a temperature greater than 850°C for a sufficient period of time.

In general, the higher the temperature the more effective the contaminant removal will be. However, higher temperatures also have the undesirable effect of hastening sensor aging. For this reason, it may be desirable to limit the number of high temperature (contaminant removal) heat exposures relative to the total number of regenerations. Initiation of the high temperature heating may be based on operating time, with a high temperature heat cycle initiated often enough to prevent enough contaminant to interfere with soot detection from ever accumulating. For example, a control method may initiate a high temperature cycle every 20 to 50 hours of engine operating time. Another method may include using a detection algorithm to detect when contamination has built up on the sensor, and initiating a high temperature cycle in response to detection of contamination. A non-limiting example of such a detection algorithm is described in U.S. Patent Application Serial No. 13/171,540. Alternatively, a high temperature cycle may be initiated if a normal sensor regeneration does not result in a resistance change between the electrodes 142, 144 corresponding to the resistance change that would be expected as a result of regeneration.

Achieving a high temperature condition at a higher temperature than a normal regeneration may be accomplished by a variety of means. A high temperature condition may be achieved by energizing the heater while the exhaust flow is low, such as at an engine idle condition. With low exhaust flow, there will be less convective heat transfer from the sensor to the exhaust gas, resulting in a greater temperature rise of the sensor for a given electrical power input to the heater. Alternatively, the electrical drive to the heater may be controlled to achieve a lower temperature for normal regeneration for soot removal, and a higher temperature for contamination removal. The electrical power to the heater may be controlled by applying a controlled DC voltage or current to the heater, with the magnitude of the voltage or current selected to achieve the desired sensor temperature. As an alternative, the heater may be provided with a pulse width modulated (PWM) heater drive voltage, for example with full battery voltage applied to the heater for an "on time" period, and essentially zero volts applied to the heater for an "off time" period. The duty cycle, defined as (on_time)/(on_time + off_time), can be controlled to achieve the desired sensor temperature. The "effective" heater voltage is approximately equal to the full battery voltage times the duty cycle percentage.

The method may further include provision for attempting to remove contamination by applying an elevated temperature to the sensor and determining if the contaminant was successfully removed. If the attempt was not successful, the method may include incrementing the heater drive upward to successively higher temperatures until either the contaminant is removed or until an upper temperature limit is reached. For example, the method may attempt to remove contamination by heating the sensor to 850°C. If it is determined that the contamination was not removed, a subsequent attempt may be made by heating the sensor to a higher temperature, for example 860°C. If the contamination was still not removed, further attempts may be made, incrementing the temperature , for example by 10°C each time, until either the contamination is removed or until a maximum allowable temperature, for example 950°C, is reached. If the maximum allowable temperature is reached and the contamination is determined to still be present, a series of heater cycles may be attempted, cycling the heater off and on repeatedly. It has been discovered that cyclic application of heat may be effective to remove contaminants that may not be effectively removed by steady state application of heat, even if the same peak temperature is achieved. Without being bound by theory, it is believed that cyclic application of heat may result in a contaminant "breaking loose" from the sensor because of cyclic relative motion of the sensor due to thermal expansion. In such a manner, contamination removal may be achieved without unnecessarily degrading the life of the sensor by unnecessary exposure to high temperature.

The method and system of the invention may be used in conjunction with a sensor for conductive particulate matter of any sort and in a variety of environments. In one exemplary embodiment, the sensor is a soot sensor in the exhaust stream of an internal combustion engine such as a diesel engine. Referring now to Figure 6, a non-limiting example of a particulate sensor diagnostic system 200 is illustrated, which includes a particulate matter sensor 210. The diagnostic system comprises a controller or an engine control module (ECM) 202. Alternatively to an ECM, a standalone diagnostic or combined sensor and diagnostic control module may be used, provided that it is able to communicate with an ECM in order to obtain information from the ECM, such as exhaust temperature, engine operating state, etc. ECM 202 comprises among other elements a microprocessor for receiving signals indicative of the vehicle performance as well as providing signals for control of various system components, read only memory in the form of an electronic storage medium for executable programs or algorithms and calibration values or constants, random access memory and data buses for allowing the necessary communications (e.g., input, output and within the ECM) with the ECM in accordance with known technologies.

In accordance with an exemplary embodiment the controller will comprise a microcontroller, microprocessor, or other equivalent processing device capable of executing commands of computer readable data or program for executing a control algorithm. In order to perform the prescribed functions and desired processing, as well as the computations therefore (e.g., the control processes prescribed herein, and the like), the controller may include, but not be limited to, a processor(s), computer(s), memory, storage, register(s), timing, interrupt(s), communication interfaces, and input/output signal interfaces, as well as combinations comprising at least one of the foregoing. For example, the controller may include input signal filtering to enable accurate sampling and conversion or acquisitions of such signals from communications interfaces. As described above, exemplary embodiments of the present invention can be implemented through computer-implemented processes and apparatuses for practicing those processes.

The ECM receives various signals from various sensors in order to determine the state of the engine as well as vary the operational state and perform diagnostics for example, the ECM can determine, based on its input from other sensors 205 and logic and control algorithms whether the engine is being started in a "cold start" state as well as perform and/or control other vehicle operations. Some of the sensors that may be included in other sensors 205 which provide input to the ECM 202 include but are not limited to the following: engine coolant temperature sensor, engine speed sensor, exhaust oxygen sensor, engine temperature, and the like. The sensors used may also be related in part to the type of engine being used (e.g., water cooled, air cooled, diesel, gas, hybrid, etc.). The ECM 202 also receives input from exhaust temperature sensor 215, which may be a temperature probe located in the exhaust stream in proximity to the particulate matter sensor or other equivalent means or method for measuring the exhaust temperature.

In accordance with operating programs, algorithms, look up tables and constants resident upon the microcomputer of the ECM various output signals, including control of heater element 160 are provided by the ECM. While the control signal for heater element 160 is relevant to the practice of the invention, the ECM may also provide other control signals to control the engine (e.g., limiting or shutting off fuel flow as well as closing or opening the intake and exhaust valves of the engine) as well as performing other vehicle operations including but not limited to: fuel/air flow control to maintain optimum, lean or rich stoichiometry as may be required to provide the required torque output; spark timing; engine output; and providing on board malfunctioning diagnostic (OBD) means to the vehicle operator.

It will be appreciated that the invention may be used in conjunction with any apparatus that may produce particulate matter (soot), including any apparatus that combusts hydrocarbon fuel. While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description.

**Claims**

1. A method for removing contamination from a particulate matter sensor, comprising the steps of:

   a. heating the sensor to a first temperature for a first duration of time, said first temperature and first duration of time sufficient to effect removal of soot from the surface of the particulate matter sensor; and
   b. heating the sensor to a second temperature for a second duration of time, said second temperature being higher than the first temperature.

2. The method of claim 1, wherein the first temperature is approximately 750°C and the second temperature is greater than 850°C.

3. The method of claim 1 wherein the particulate matter sensor is exposed to exhaust gas from a soot generating device and wherein heating to the second temperature is repeated after a time interval based on operating time of the soot generating device.

4. The method of claim 1, wherein heating to the second temperature is initiated upon detection of the presence of contamination on the particulate matter sensor.

5. The method of claim 1, wherein the particulate matter sensor is exposed to exhaust gas, and the step of heating to the second temperature is performed when the flow rate of the exhaust gas is below a predetermined value.

**6.** The method of claim 1, wherein the sensor is heated by an electrically powered heater and the temperature is selectively controlled to the first temperature or the second temperature by controlling the power supplied to the heater.

**7.** The method of claim 6, wherein the power supplied to the heater is controlled by controlling one of the magnitude of a voltage supplied to the heater or the magnitude of a current supplied to the heater.

**8.** The method of claim 6, wherein the power supplied to the heater is controlled by applying one of a pulse width modulated voltage or a pulse width modulated current to the heater.

**9.** The method of claim 1, additionally comprising the steps of:

c. after heating the sensor to the second temperature for the second duration of time, determining if contamination is present on the sensor; and
d. if it is determined that contamination is present on the sensor after heating the sensor to the second temperature for the second duration of time, heating the sensor to a third temperature for a third duration of time, said third temperature being higher than the second temperature.

**10.** The method of claim 9, additionally comprising the step of repeatedly cycling between heating the sensor to the third temperature and allowing the sensor to cool to below the first temperature.

**11.** A system for an electrically conductive particulate matter sensor comprising a substrate and two electrodes on said substrate adapted to collect particulate matter between the electrodes, thereby establishing an electrically conductive path through collected particulate matter between the electrodes that can be detected by measuring electrical resistance between the electrodes, said system comprising a microprocessor in communication with the sensor and a storage medium including instructions for causing the microprocessor to implement the method of claim 1.

FIG. 1

FIG. 2

FIG. 3

FIG. 4

500 —

Vref

24

R-pull-up

VOLTAGE INPUT

142

22

BATTERY
VOLTAGE

502

R-Bias    R-Sensor    Rsubstrate    HEAT    R-heater

150         542              554                        160

144

HEATER SWITCH

504

## FIG. 5

205

OTHER
SENSORS

202

200

ENGINE CONTROL
MODULE

RESISTANCE
MEASUREMENT

210

PM
SENSOR

HEATER
CONTROL

215

EXHAUST
TEMP
SENSOR

220

DIAGNOSTIC
SIGNAL

## FIG. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4656832 A, Yukihisa
- US 6634210 B, Bosch
- US 94786710 A

- US 614654 A
- US 171540 A